# EUROPÄISCHE PATENTSCHRIFT

(11) **EP 1 936 349 B1**
(45) Veröffentlichungstag und Bekanntmachung des Hinweises auf die Patenterteilung: **02.05.2012**
(21) Anmeldenummer: 07121351.6
(22) Anmeldetag: 22.11.2007
(51) Int. Cl.: G01M 17/02, G01B 11/16

(54) **Vorrichtung zum Prüfen eines Prüfobjekts, insbesondere eines Reifens, mittels eines zerstörungsfreien Messverfahrens**
Device for testing a test object, in particular a tyre, using a non-destructive measuring method
Dispositif d'essai d'un objet à tester, en particulier d'un pneu, à l'aide d'un procédé de mesure non-destructif

(30) Priorität: 22.12.2006 DE 102006061003
(43) Veröffentlichungstag der Anmeldung: 25.06.2008
(60) Teilanmeldung: 12153165.1
(73) Patentinhaber: Mähner, Bernward, 82205 Gilching (DE); Dengler, Stefan, 75365 Calw-Stammheim (DE)
(72) Erfinder: Mähner, Bernward, 82205 Gilching (DE); Dengler, Stefan, 75365 Calw-Stammheim (DE)
(74) Vertreter: Schober, Christoph D.

(56) Entgegenhaltungen:
- EP-A- 1 099 947
- DE-C1- 19 748 544
- US-A1- 2003 038 945
- R. KRUPKA, T. WALZ, A. ETTEMEYER: "ADVANCED INSPECTION OF HELICOPTER STRUCTURES USING SHEAOGRAPHY" NDT NET, [Online] Bd. 9, Nr. 11, 30. November 2004 (2004-11-30), XP002527614 Gefunden im Internet: URL:http://www.ndt.net/article/wcndt2004/p df/optical_techniques/669_ettemeyer.pdf> [gefunden am 2009-05-12]

## Beschreibung

Die Erfindung betrifft eine Vorrichtung zum Prüfen eines Prüfobjekts mittels eines zerstörungsfreien Messverfahrens. Bei dem Prüfobjekt handelt es sich insbesondere um einen Reifen, jedoch können auch andere Bauteile mit der erfindungsgemäßen Vorrichtung geprüft werden. Das zerstörungsfreie Messverfahren, mit dem das Prüfobjekt geprüft wird, ist beispielsweise ein interferometrisches Messverfahren. Die Vorrichtung ist mit wenigstens einem Messkopf versehen, durch den das Prüfobjekt zum Erzeugen eines Messergebnisses abgetastet werden kann. Die Vorrichtung ist ferner mit einem Positionierungsmittel versehen, durch das der Messkopf zwischen einer außerhalb des Prüfobjekts befindlichen Parkposition und einer beispielsweise innerhalb des Prüfobjekts befindlichen Messposition bewegt werden kann. Weiterhin ist die Vorrichtung mit einer Druckkammer versehen, in welcher das Prüfobjekt während der Prüfung einem vorgegebenen Druck aussetzbar ist und die eine Haube aufweist. Die Vorrichtung weist außerdem ein Untergestell auf, auf dem das Prüfobjekt während der Prüfung lagerbar ist.

Reifen oder andere im Einsatz belastete Bauteile werden zur Qualitätskontrolle und zur Reduzierung von Sicherheitsrisiken einer Werkstoffprüfung unterzogen, die es ermöglicht, fehlerhafte Stellen, so genannte Fehlstellen, zu erkennen. Vor allem dann, wenn es sich um benutzte Reifen handelt, die runderneuert werden sollen, wird in der Regel eine zerstörungsfreie Werkstoffprüfung angewendet, die eine vergleichsweise schnelle Reihenuntersuchung gewährleistet.

Häufig anzutreffen in der industriellen Praxis sind optische Messverfahren, wie zum Beispiel die Holographie oder die auch als Speckle-Pattern-Shearing-Interferometrie bezeichnete Shearographie. Die Shearographie ist ein relatives interferometrisches Messverfahren, das ein Ergebnisbild liefert, welches den Unterschied zwischen zwei zeitlich versetzten Zuständen des Prüfobjekts darstellt. Um das auf Grund der zunehmenden Verbreitung von elektronischen Bildsensoren, wie zum Beispiel CCD- oder CMOS-Sensoren, heutzutage in der Regel digitale Ergebnisbild zu erzeugen, ist es demzufolge erforderlich, den Zustand des Prüfobjekts zwischen zwei Messungen durch Einwirkung einer mechanischen, thermischen oder pneumatischen Kraft zu verändern. Bekannte Vorrichtungen weisen aus diesem Grund eine Druckkammer auf, die entweder evakuiert oder mit Druck beaufschlagt wird, so dass sich das in der Druckkammer befindende Prüfobjekt infolge der Druckänderung verformt und damit von einem ersten Referenzzustand in einen zweiten Messzustand übergeht.

Im Unterschied zu der Holographie ermittelt die Shearographie nicht die Verformung an der Oberfläche eines Prüfobjekts, sondern misst den Gradienten der Verformung. Dies ist darauf zurückzuführen, dass für die Shearographie ein so genanntes Shearingelement Anwendung findet, bei dem es sich um eine Shearoptik, wie zum Beispiel ein optischer Keil, ein optisches Biprisma oder ein Michelson-Interferometer, handelt, die eine Bildverdopplung erzeugt. Auf Grund des Shearingelements entstehen zwei geringfügig räumlich versetzte Bilder von dem Prüfobjekt, die überlagert werden, um auf Grund der sich auf diese Weise ergebenden Interferenz ein Interferogramm zu erzeugen. Das den Gradienten der Verformung kennzeichnende Shearogramm wird durch Subtraktion der Intensitäten der im Referenzzustand und im Messzustand gewonnenen Interferogramme erzeugt. Das Shearogramm gibt zu erkennen, ob sich die Lage eines Punktes zu einem benachbarten Punkt auf Grund der Verformung des Prüfobjekts geändert hat. Falls ja, dann führt dieser Wegunterschied zu einer lokalen Veränderung der Intensitätsverteilung, die Auskunft über eine Fehlstelle gibt. Interferometrische Messverfahren, die auf dieser Speckle-Interferomertrie beruhen, werden in der DE 42 31 578 A1 und EP 1 014 036 B1 beschrieben.

Die zum Prüfen eines Prüfobjekts mittels eines interferometrischen Messverfahrens eingesetzten Vorrichtungen sind in der Regel mit wenigstens einem Messkopf versehen, der eine Beleuchtungseinheit und eine Bildaufnahmeeinheit aufweist. Die Beleuchtungseinheit wird häufig durch einen kohärentes Licht emittierenden Laser oder Laserdioden gebildet. Die Bildaufnahmeeinheit ist üblicherweise eine Kamera, die mit einem Bildsensor, das heißt einem lichtempfindlichen Halbleitersensor, zum Beispiel einem CCD- oder CMOS-Sensor, versehen ist. Um ein aussagekräftiges Messergebnis zu erhalten, ist es erforderlich, das Gesichtsfeld der Kamera und den zu prüfenden Abschnitt des Prüfobjekts auf einander abzustimmen. Gewöhnlich erfolgt eine solche Abstimmung dadurch, dass der Messkopf in einer Messposition positioniert und in einer Beobachtungsrichtung ausgerichtet wird, die sicherstellen, dass einerseits der gewählte Messabschnitt des Prüfobjekts vollständig im Gesichtsfeld der Kamera liegt und andererseits aufeinander folgende Messabschnitte sich ausreichend überlappen, um eine lückenlose Prüfung zu ermöglichen. Die Messposition und die Beobachtungsrichtung des Messkopfs hängen von den Abmessungen des Prüfobjekts ab. Demzufolge sind aus der EP 1 284 409 A1 und DE 103 33 802 A1 Vorrichtungen bekannt, die es ermöglichen, das Prüfobjekt optisch, beispielsweise mittels so genannter Lichtschnitte, zu vermessen, um in Abhängigkeit von den auf diese Weise gewonnenen Daten den Messkopf zu positionieren und auszurichten.

Das Dokument "Advanced Inspection of Helicopter Structures Using Shearography" von R. Krupka, T. Walz und A. Ettemeyer aus der Datenbank ndt.net ("database and journal of non-destructive testing") beschreibt vier unterschiedliche Vorrichtungen zum Prüfen eines Prüfobjekts, welche in der Luft- und Raumfahrttechnik eingesetzt werden. Die erste Vorrichtung ist für die Prüfung von Rotorblättern eines Hubschraubers geeignet und weist eine 10 m lange Druckkammer auf. Zwei miniaturisierte Shearing-Kameras sind derart angeordnet, dass jede der Kameras jeweils eine Seite des Rotorblatts abtastet. Jede der Kameras ist auf einer separaten Führungsschiene angeordnet. Jedes Rotorblatt wird bei unterschiedlichem Umgebungsdruck getestet, um mögliche Materialfehler zu erkennen.

Weiterhin beschreibt das oben genannte Dokument eine Vorrichtung zum Prüfen von Teilen des thermischen Schutzschildes der Ariane-5-Rakete. Die zu prüfenden Teile sind ebenso wie das Positionierungsmittel des Testkopfs auf einer vibrationsisolierten Basisplatte angeordnet. Durch die Vorrichtung lassen sich schnell Defekte an den Bauteilen ermitteln, die anschließend einfach manuell markiert werden können.

Die dritte Vorrichtung eignet sich zum Prüfen von Verschleißteilen eines Flugzeugtriebwerks, insbesondere zum Prüfen von Dichtungen. Das zu untersuchende Bauteil wird in eine Schwingung versetzt, so dass die Stellen, an denen die Dichtung nur ungenügend an dem zu prüfenden Triebwerk befestigt ist, durch Shearografie sichtbar werden.

Weiterhin beschreibt das oben genannte Dokument ein tragbares Shearografiesystem, welches zur Wartung von Flugzeugen eingesetzt wird. Das Prüfgerät wird wie eine Saugglocke auf den zu untersuchenden Bereich angebracht, und die Oberfläche des Bereichs wird bei unterschiedlichen Drücken beobachtet.

Die Druckschrift US 2003/0038945 A1 beschreibt eine Vorrichtung und ein Verfahren zum Testen von Objekten. Mittels eines interferometrischen Test verfahrens werden die Form und die räumlichen Koordinaten des zu testenden Objekts, sowie die räumlichen Koordinaten von Fehlstellen, ermittelt.

Die Druckschrift EP 1 099 947 A2 beschreibt eine Vorrichtung und ein Verfahren zum optischen Testen von Reifen. Als optisches Testverfahren wird ebenfalls das Shearografieverfahren verwendet. Um die für die Erzeugung der Interferenz benötigten räumlich versetzten Bilder zu erzeugen, wird ein halb durchlässiger Spiegel verwendet.

Ebenfalls beschreibt die DE 197 48 544 C1 ein Verfahren und eine Vorrichtung zum Prüfen von elastischen Gegenständen, insbesondere von Reifen. Die Vorrichtung umfasst ebenfalls einen interferometrischen Prüfkopf, der mit einer Auswerteeinheit verbunden ist. Die Vorrichtung weist ebenfalls eine Aufnahmevorrichtung auf, in der der Reifen aufgenommen wird, und welcher die Ausübung unterschiedlicher Drücke auf beiden Seiten der Reifenwand ermöglicht.

Ein Reifenprüfgerät, bei dem ein zu prüfender Reifen ohne Felge und Radscheibe in einer liegenden Position in einer Druckkammer angeordnet wird, offenbart die DE 199 44 314 A1. Das Reifenprüfgerät weist mehrere Messköpfe auf, die sich in einem vorgegebenen Abstand von der inneren Umfangsfläche, der inneren Seitenfläche oder der äußeren Seitenfläche des Reifens positionieren lassen, um den Unterbau des Reifens, das heißt die Karkasse, einen häufig zwischen der Karkasse und der Lauffläche angeordneten Gürtel sowie die Seitenwand des Reifens zu prüfen. Die Messköpfe weisen jeweils eine Beleuchtungseinheit und eine Bildaufnahmeeinheit auf und sind in einem Winkel zueinander angeordnet, so dass unterschiedliche Abschnitte des Reifens gleichzeitig geprüft werden können, um eine vergleichsweise schnelle Prüfung zu erreichen.

Die Messköpfe sind mit einem Positionierungsmittel verbunden, das es ermöglicht, die Messköpfe von einer sich außerhalb des Reifens befindenden und somit einen Wechsel der zu prüfenden Reifen gewährleistenden Parkposition in eine sich innerhalb des Reifens befindende Messposition zu bewegen, um die innere Umfangsfläche und die innere Seitenwand des Reifens zu prüfen. Zu diesem Zweck weist das Positionierungsmittel einen in der axialen Richtung des Reifens verstellbaren Arm auf, an dem die Messköpfe angeordnet sind. Um die Messköpfe in der erforderlichen Messposition positionieren und in der gewünschten Beobachtungsrichtung ausrichten zu können, sind die Messköpfe in radialer Richtung des Reifens verstellbar und um eine Schwenkachse drehbar an dem Arm angeordnet.

Die Druckkammer wird durch eine Haube gebildet, die an einem vertikal beweglichen Schlitten angeordnet ist. In der geschlossenen Stellung der Druckkammer liegt die Haube dichtend auf einem Untergestell auf, auf dem der zu prüfende Reifen während der Prüfung gelagert ist. Die Haube ist einteilig ausgestaltet und beispielsweise durch Gießen gefertigt. Da die Haube den zu prüfenden Reifen umschließt, erforderte die Prüfung von Reifen mit einem vergleichsweise großen Durchmesser eine Dimensionierung der Haube, die der Haube ein beträchtliches Gewicht verleihen würde. Die Haube wäre in diesem Fall mit einem vertretbaren Aufwand nicht mehr zu handhaben. Das bekannte Prüfgerät ist daher faktisch ungeeignet, Reifen mit einem vergleichsweise großen Durchmesser zu prüfen.

Reifen mit einem vergleichsweise großen Durchmesser finden vor allem bei schwerem Gerät Anwendung. Schweres Gerät, wie zum Beispiel Industrie- und Landwirtschaftsfahrzeuge oder Erdbewegungsmaschinen, werden in der Regel mit so genannten Off-The-Road (OTR)-Reifen ausgerüstet, die vergleichsweise große Durchmesser von zuweilen mehr als 5 m haben. OTR-Reifen haben eine hohe Tragfähigkeit. So sind OTR-Reifen zum Beispiel in der Lage, Muldenkipper zu tragen, die für den Transport im Bergbau oder für den Frachtumschlag in Häfen eingesetzt werden und Ladekapazitäten von mehr als 70 Tonnen haben können.

Die Benutzung von OTR-Reifen ist mit erheblichen Risiken verbunden. So kann zum Beispiel die durch das Platzen eines OTR-Reifens hervorgerufene Druckwelle einen beträchtlichen Schaden anrichten und das Leben von Personen, die sich in der Nähe des mit dem OTR-Reifen ausgerüsteten Fahrzeugs befinden, erheblich gefährden. Darüber hinaus ist das Liegenbleiben eines mit einem OTR-Reifen ausgerüsteten Fahrzeugs infolge eines Reifenschadens mit einer in der Regel schwerwiegenden wirtschaftlichen Einbuße verbunden. So sind zum Beispiel Minen oder Bergwerke oftmals mit nur einspurigen Fahrbahnen versehen, so dass das Liegenbleiben eines zum Abtransport des abgebauten Rohstoffs, zum Beispiel Erz, eingesetzten Fahrzeugs einen zeitweiligen Stillstand der Mine oder des Bergwerks hervorrufen kann. Die Prüfung von OTR-Reifen auf Fehlstellen ist daher von enormer Bedeutung.

Der Erfindung liegt die Aufgabe zugrunde, eine Vorrichtung zum Prüfen eines Prüfobjekts zu schaffen, durch die sich relativ große Bauteile, insbesondere Reifen mit einem vergleichsweise großen Durchmesser, prüfen lassen.

Diese Aufgabe wird durch eine Vorrichtung gemäß Anspruch 1 und eine Vorrichtung gemäß Anspruch 5 **gelöst**. Bevorzugte Ausgestaltungen dieser Vorrichtungen werden in den Ansprüchen 2 bis 4 und 6 bis 30 definiert.

Die erfindungsgemäße Vorrichtung zum Prüfen eines Prüfobjekts ist mit wenigstens einem Messkopf versehen, durch den das Prüfobjekt zum Erzeugen eines Messergebnisses abtastbar ist. Der Messkopf oder die Messköpfe haben zum Beispiel eine Ausgestaltung wie sie in der EP 1 014 036 B1 beschrieben ist, um das Prüfobjekt mittels eines interferometrischen Messverfahrens zu prüfen. Grundsätzlich ist es auch möglich, dass der Messkopf eine Ausgestaltung hat, die es ermöglicht, andere zerstörungsfreie Messverfahren, wie zum Beispiel Ultraschallprüfung oder Durchstrahlungsprüfung mittels Röntgenstrahlen, durchzuführen. Weiterhin ist es möglich, dass mehrere Messköpfe vorhanden sind, mittels denen unterschiedliche Messverfahren durchgeführt werden können, zum Beispiel ein oder mehrere Messköpfe zur Durchführung eines interferometrischen Messverfahrens und ein oder mehrere Messköpfe zur Durchführung einer Durchstrahlungsprüfung mittels Röntgenstrahlen. Die erfindungsgemäße Vorrichtung ist ferner mit einem Positionierungsmittel versehen, durch das der Messkopf zwischen einer außerhalb des Prüfobjekts befindlichen Parkposition und einer beispielsweise innerhalb des Prüfobjekts befindlichen Messposition bewegt werden kann. Weiterhin ist die Vorrichtung mit einer Druckkammer versehen, in welcher das Prüfobjekt während der Prüfung einem vorgegebenen Druck aussetzbar ist und die eine Haube aufweist. Die Vorrichtung weist außerdem ein Untergestell auf, auf dem das Prüfobjekt während der Prüfung lagerbar ist.

Das Untergestell ist auf einem ersten Lagerelement abgestützt, durch das die Übertragung von Schwingungen von einer Unterlage auf das Untergestell reduziert werden kann. Die Haube ist auf einem zweiten Lagerelement abgestützt, durch das die Übertragung von Schwingungen von der Unterlage auf die Haube reduziert werden kann. Die Haube ist separat von dem Untergestell abgestützt, so dass das erste Lagerelement eigens für die Abstützung des Untergestells und das zweite Lagerelement eigens für die Abstützung der Haube ausgelegt werden kann. Diese funktionale Entkopplung kommt vor allem dann zum Tragen, wenn relativ große Bauteile, wie zum Beispiel OTR-Reifen, geprüft werden sollen und folglich die Haube verhältnismäßig groß und schwergewichtig ist.

Die Haube weist eine offene Seite auf, die der Unterlage zugewandt ist. Die Unterlage trägt demzufolge dazu bei, die Druckkammer abzuschließen. Bei der Unterlage handelt es sich im einfachsten Fall um den Boden, beispielsweise das Fundament eines Gebäudes. Die Unterlage kann allerdings auch eine auf dem Boden angeordnete Platte oder ein sonstiger Untergrund sein, der geeignet ist, die Druckkammer druckdicht abzuschließen.

In einer bevorzugten Ausgestaltung der Erfindung sind das erste Lagerelement und/oder das zweite Lagerelement als Schwingungsisolator ausgestaltet, um die auftretenden Schwingungen, insbesondere Luft- und Körperschall, zu minimieren. In diesem Fall ist die Federsteife des Lagerelements an die abgestützte Masse und die Frequenz der zu isolierenden Schwingung so angepasst, dass die Eigenfrequenz von Lagerelement und Masse weit unterhalb der Anregungsfrequenz liegt. Diese Abstimmung des Lagerelements lässt sich auf Grund der voneinander entkoppelten Abstützung von Haube und Untergestell deutlich einfacher vornehmen als im Stand der Technik. Dies gilt vor allem dann, wenn das Prüfobjekt vergleichsweise groß ist, wie zum Beispiel ein OTR-Reifen, so dass die das Prüfobjekt umgebende Haube ebenfalls vergleichsweise groß und damit in der Regel schwergewichtig ist. Als schwingungsisolierende Lagerelemente können in an sich bekannter Weise Gummi-Metall-Bauteile eingesetzt werden, wie zum Beispiel Gummifedern. Möglich ist allerdings auch, die Lagerelemente mittels Stahlfedern, Luftfedern und/oder hydropneumatische Federn auszugestalten.

Darüber hinaus können die Lagerelemente in Abhängigkeit vom jeweiligen Anwendungsfall auch als Schwingungsdämpfer oder Schwingungstilger ausgestaltet sein.

In einer weiteren bevorzugten Ausgestaltung der erfindungsgemäßen Vorrichtung ist das zweite Lagerelement alternativ oder zusätzlich als Dichtungselement ausgestaltet. Bei dem Dichtungselement handelt es sich beispielsweise um eine extrudierte Dichtung oder ein Dichtungsprofil, das die Haube gegenüber der Unterlage druckdicht abdichtet. Möglich ist auch, dass das zweite Lagerelement sich aus einer solchen Dichtung und beispielsweise einem Schwingungsisolator zusammensetzt. So könnte zum Beispiel eine im Querschnitt quadratische oder rechteckige Haube in den Eckbereichen durch jeweils einen Schwingungsisolator abgestützt werden und der zwischen den Schwingungsisolatoren vorhandene Freiraum durch eine Dichtung abgedichtet werden.

Vor allem dann, wenn die Haube über verhältnismäßig große Abmessungen verfügt, ist es vorteilhaft, wenn die Haube im Wesentlichen zerstörungsfrei zerlegbar ist. Die Haube kann auf diese Weise in einzelne Bestandteile zerlegt werden, um beispielsweise einen einfachen Transport zu gewährleisten. In diesem Zusammenhang ist es ferner von Vorteil, wenn auch das Untergestell und/oder das Positionierungsmittel im Wesentlichen zerstörungsfrei zerlegbar sind.

Vorteilhaft ist ferner, das Positionierungsmittel an dem Untergestell abzustützen, so dass für das Positionierungsmittel keine eigenen Lagerelemente erforderlich sind. Möglich ist allerdings auch, das Positionierungsmittel separat von dem Untergestell mittels eines Lagerelements auf der Unterlage abzustützen.

Bevorzugt ist die Haube mit einer Erweiterung versehen, die in der Parkposition zumindest einen Teil des Positionierungsmittels aufnimmt. Eine solche Ausgestaltung ermöglicht es, die Haube vornehmlich in Hinsicht auf die Größe des Prüfobjekts zu dimensionieren und damit vergleichsweise kompakt auszugestalten, so dass die Druckkammer relativ schnell evakuiert oder mit Druck beaufschlagt werden kann, wie es beispielsweise erforderlich ist, wenn ein Reifen mittels eines shearographischen Messverfahrens geprüft wird. Die Erweiterung, die hauptsächlich das Positionierungsmittel und unter Umständen auch den Messkopf aufnimmt, verfügt über ein vergleichsweise geringes Volumen, so dass die Zeitdauer, die benötigt wird, um eine Druckänderung in der Druckkammer durchzuführen, durch das Volumen der Erweiterung nur marginal beeinflusst wird. Der Ort der Erweiterung hängt von der Ausgestaltung des Positionierungsmittels ab. So kann sich die Erweiterung beispielsweise im Bereich einer Deckfläche und/oder einer Seitenfläche der Haube erstrecken.

Weiterhin ist es von Vorteil, wenn die Haube einen Rahmen aufweist, der mittels einer Vielzahl an Paneelen verkleidet ist. Die zweckmäßigerweise mittels einer Dichtung druckdicht abgedichteten Paneelen ermöglichen eine Anpassung der Haube an das durchzuführende Messverfahren. Wird zum Beispiel eine Durchstrahlungsprüfung mittels Röntgenstrahlen durchgeführt, so können die Paneelen beispielsweise mit Blei beschichtet sein, um eine Abschirmung gegen die Röntgenstrahlen zu gewährleisten. Um zum einen ein einfaches Austauschen der Paneelen und zum anderen ein den Transport erleichterndes Zerlegen der Haube zu gewährleisten, sind die Paneelen vorteilhafterweise mittels Befestigungselementen, zum Beispiel Schrauben, lösbar an dem Rahmen befestigt. Zu einem einfachen Transport der Haube trägt ferner bei, wenn der Rahmen vorteilhafterweise im Wesentlichen zerstörungsfrei in eine Vielzahl an Rahmenteilen zerlegbar ist. Die Rahmenteile können beispielsweise mittels Schrauben miteinander verbunden sein.

Bevorzugt ist die Haube mit einer Tür versehen, die vorzugsweise einflügelig oder zweiflügelig ausgestaltet ist. Im Unterschied zum Stand der Technik gemäß der DE 199 44 314 A1 ist es aufgrund der Tür nicht erforderlich, die Haube anzuheben, um das Prüfobjekt auf dem Untergestell anzuordnen. Vielmehr kann das Prüfobjekt durch die Tür hindurch in die Druckkammer transportiert werden. Das Vorsehen der Tür kommt vor allem bei vergleichsweise großen Prüfobjekten, wie zum Beispiel OTR-Reifen, zum Tragen, da in diesem Fall die Haube vergleichsweise schwergewichtig ist, so dass beispielsweise die Gestaltung eines die Haube absenkenden und anhebenden Schlittens einen hohen Aufwand erforderte. Bei vergleichsweise großen Prüfobjekten und einer demzufolge erforderlichen großen Türöffnung bietet es sich an, die Tür zwei- oder mehrflügelig auszugestalten, um ein einfaches Öffnen und Schließen der Tür sicherzustellen und, wenn die Tür vorteilhafterweise als Schwenktür ausgestaltet ist, einen möglichst kleinen Schwenkbereich zu erhalten. Die als Schwenktür ausgestaltete Tür ist zweckmäßigerweise entweder um eine vertikale Achse oder um wenigstens eine horizontale Achse schwenkbar. Im ersteren Fall hat es sich als vorteilhaft erwiesen, die Tür mit einem Stützrad zu versehen, das ein einfaches Öffnen und Schließen der Tür auch dann sicherstellt, wenn diese vergleichsweise groß und schwergewichtig ist. Im letzteren Fall ist es von Vorteil, die Tür mit einem Gegengewicht zu verbinden, das ein leichtes Öffnen und Schließen der beispielsweise schwenk- und verschiebbar gelagerten Tür gewährleistet. Je nach Anwendungsfall kann die Tür jedoch insbesondere auch als Schiebe- oder Rolltür ausgestaltet sein. Die Tür ist zweckmäßigerweise im geschlossenen Zustand mittels einer Dichtung druckdicht abgedichtet, um eine Druckänderung in der Druckkammer vornehmen zu können, wie dies beispielsweise bei einem shearographischen Messverfahren erforderlich ist.

In einer bevorzugten Ausgestaltung der erfindungsgemäßen Vorrichtung ist in der Druckkammer wenigstens ein Füllkörper angeordnet. Der zum Beispiel aus Schaumstoff bestehende und von einer gasdichten Hülle umschlossene Füllkörper hat den Zweck, zum einen Luft- und Körperschall zu dämpfen und zum anderen das Volumen der Druckkammer zu verkleinern, um auf diese Weise die Zeit, die erforderlich ist, um eine Druckänderung in der Druckkammer herbeizuführen, zu verkürzen. Der Füllkörper ist vorteilhafterweise transportabel, so dass das Volumen der Druckkammer durch das Vorsehen einer geeigneten Anzahl an Füllkörpern gezielt an die Größe des Prüfobjekts angepasst werden kann.

Bevorzugt ist in der Druckkammer wenigstens eine Kamera angeordnet, die zweckmäßigerweise mit einem außerhalb der Druckkammer angeordneten Monitor beispielsweise mittels einer Funkverbindung verbunden ist. Die Kamera und der Monitor können Bestandteil eines Navigationssystems sein, welches das Beladen und Entladen der Druckkammer, zum Beispiel mittels eines Gabelstaplers, erleichtert. Die Kamera kann jedoch auch dazu eingesetzt werden, das Innere der Druckkammer während der Prüfung des Prüfobjekts zu überwachen. Um die für eine zuverlässige Aufnahme der Kamera im Inneren der Druckkammer erforderliche Helligkeit sicherzustellen, ist es von Vorteil, in der Druckkammer wenigstens eine künstliche Lichtquelle anzuordnen. Eine solche Leuchte macht das Vorsehen eines Fensters entbehrlich und ermöglicht damit eine einfache und kostengünstige Gestaltung der Haube. Vor allem dann, wenn das Prüfobjekt mittels eines shearographischen Messverfahrens geprüft wird, bietet die künstliche Lichtquelle gegenüber dem durch ein Fenster in die Druckkammer einfallenden Tageslicht den Vorteil einer einfachen Anpassung der Intensität und der Wellenlänge der von der Lichtquelle emittierten Strahlung an den Messkopf, und zwar so, dass eine Beeinträchtigung der shearographischen Prüfung durch die Lichtquelle vermieden wird.

Weiterhin ist es in Hinsicht auf eine sicherheitsgerechte Ausgestaltung der erfindungsgemäßen Vorrichtung von Vorteil, die Druckkammer mit einem Sicherheitsventil zu versehen. Das Sicherheitsventil dient dazu, einen übermäßigen Unterdruck und/oder Überdruck in der Druckkammer zu vermeiden. Vor allem dann, wenn vergleichsweise große Prüfobjekte geprüft werden und demzufolge die Druckkammer über ein großes Volumen verfügt, hat es sich herausgestellt, dass schon eine den vorgegebenen Druck um ca. 150 mbar über- oder unterschreitende Druckdifferenz zu bleibenden Verformungen der Haube führen kann.

Bevorzugt ist der Messkopf durch das Positionierungsmittel in einer axialen Richtung und/oder in einer radialen Richtung bewegbar. Eine solche Ausgestaltung bietet sich vor allem dann an, wenn das Prüfobjekt rotationssymmetrisch ist, wie zum Beispiel ein Reifen. Eine praxisgerechte Prüfung ergibt sich oftmals, wenn das Prüfobjekt in einer liegenden Position geprüft wird. In diesem Fall verläuft die axiale Richtung vertikal, wohingegen die radiale Richtung horizontal verläuft. Je nach Anwendungsfall kann es allerdings zweckmäßig sein, das Prüfobjekt in einer aufrechten Position zu prüfen, so dass die axiale Richtung horizontal verläuft, wie es zum Beispiel aus der DE 203 14 939 U1 bekannt ist. Eine solche Anordnung bietet sich vor allem dann an, wenn das Prüfobjekt, zum Beispiel ein OTR-Reifen, vergleichsweise schwergewichtig ist und damit ein Wenden des Prüfobjekts mit einem vergleichsweise hohen Aufwand verbunden ist.

Bevorzugt umfasst das Positionierungsmittel eine erste Verstelleinheit, durch die der Messkopf in der axialen Richtung bewegbar ist, und eine zweite Verstelleinheit, durch die der Messkopf in radialer Richtung bewegbar ist. Die Verstelleinheiten sind beispielsweise als Linearführung oder Linearmotor ausgestaltet und können aneinander gekoppelt sein. Je nach Anwendungsfall kann das Positionierungsmittel zudem weitere Verstelleinheiten aufweisen, die beispielsweise ein Schwenken des Messkopfs um eine horizontale und/oder vertikale Achse ermöglichen.

Handelt es sich bei dem Prüfobjekt um einen rotationssymmetrischen Körper, wie zum Beispiel einen Reifen, hat es sich als vorteilhaft erwiesen, wenn der Messkopf relativ zu dem Prüfobjekt um eine sich in der axialen Richtung erstreckende Rotationsachse oder Rollachse drehbar ist. Das Prüfobjekt kann auf diese Weise in Umfangsrichtung vollständig abgetastet werden. In diesem Zusammenhang ist es ferner vorteilhaft, das Untergestell mit einer Drehvorrichtung zu versehen, durch die das Prüfobjekt um die Rotationsachse drehbar ist. Alternativ oder zusätzlich kann die Relativbewegung von Prüfobjekt und Messkopf durch eine drehbare Ausgestaltung des Positionierungsmittels erreicht werden.

Um ein interferometrisches Messverfahren durchzuführen, umfasst der Messkopf vorteilhafterweise eine Beleuchtungseinheit, durch die das Prüfobjekt beleuchtet wird, ein Shearingelement, durch das die von dem Prüfobjekt rückgestreuten Lichtbündel zur Interferenz gebracht werden und einen elektronischen Bildsensor, der im Strahlengang des Shearingelements angeordnet ist und die interferierenden Lichtbündel aufnimmt. Je nach Anwendungsfall kann die zum Beispiel durch Laserdioden gebildete Beleuchtungseinheit entweder integraler Bestandteil des Messkopfes oder von diesem separat ausgebildet sein.

Die erfindungsgemäße Vorrichtung weist vorteilhafterweise eine Schutzblende auf, die dazu dient, den Messkopf, insbesondere die Beleuchtungseinheit, in der Parkposition abzuschirmen. Vor allem dann, wenn die Beleuchtungseinheit durch eine oder mehrere Laser oder Laserdioden gebildet wird, deren Frequenzstabilität im Allgemeinen von der Betriebstemperatur abhängig ist, bietet die Schutzblende den Vorteil, diese Laserlichtquellen ununterbrochen zu betreiben und damit durch Ein- oder Ausschaltvorgänge hervorgerufene Temperaturschwankungen zu vermeiden. Der von den Laserlichtquellen emittierte Laserstrahl wird durch die Schutzblende abgeschirmt, so dass die Druckkammer gefahrlos von Personen betreten werden kann, um beispielsweise das Prüfobjekt auf dem Untergestell zu positionieren.

In Hinsicht auf eine praxisgerechte Ausgestaltung ist es außerdem von Vorteil, wenn die erfindungsgemäße Vorrichtung eine Steuer- und Auswerteeinrichtung umfasst, mittels der das Positionierungsmittel und/oder die Drehvorrichtung und/oder der Messkopf und/oder der in der Druckkammer herrschende Druck gesteuert und das erzielte Messergebnis ausgewertet werden können.

Einzelheiten und weitere Vorteile der Erfindung ergeben sich aus der nachfolgenden Beschreibung eines bevorzugten Ausführungsbeispiels. In den das Ausführungsbeispiel lediglich schematisch darstellenden Zeichnungen veranschaulichen im Einzelnen:
- Fig. 1: einen Querschnitt durch eine Vorrichtung zum Prüfen eines Reifens, die eine Druckkammer umfasst;
- Fig. 2: eine perspektivische Ansicht eines Positionierungsmittels, an dem ein Messkopf angeordnet ist;
- Fig. 3: eine perspektivische Ansicht der Druckkammer, die einen Rahmen und eine Vielzahl an Paneelen aufweist, und
- Fig. 4: eine perspektivische Ansicht einer an dem Rahmen befestigten Paneele.

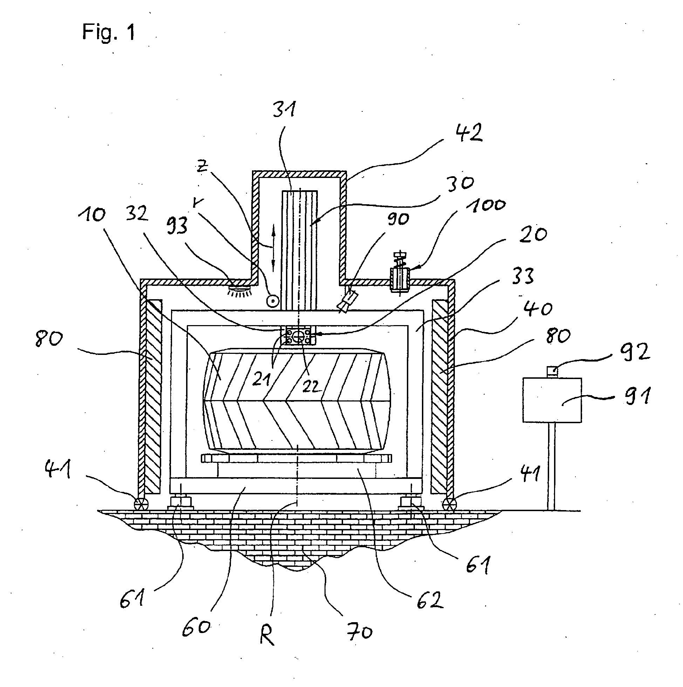

Die in Fig. 1 dargestellte Vorrichtung dient zum Prüfen eines Prüfobjekts mittels eines interferometrischen Messverfahrens. Bei dem Prüfobjekt handelt es sich im vorliegenden Fall um einen Reifen 10, der ein OTR-Reifen sein kann. Die Vorrichtung weist wenigstens einen Messkopf 20 auf, durch den der Reifen 10 zum Erzeugen eines Messergebnisses abgetastet werden kann. Der Messkopf 20 kann eine Ausgestaltung haben, wie sie aus der EP 1 014 036 B1 bekannt ist, um den Reifen 10 mittels eines interferometrischen, insbesondere eines shearographischen, Messverfahrens zu prüfen. Demnach verfügt der Messkopf 20 über eine Beleuchtungseinheit, durch die sich der Reifen 10 beleuchten lässt und die zum Beispiel durch eine Vielzahl an Laserdioden 21 gebildet wird. Der Messkopf 20 weist ferner ein Shearingelement auf, durch das die von dem Reifen 10 rückgestreuten Lichtbündel zur Interferenz gebracht werden. Das Shearingelement setzt sich zum Beispiel aus einem Strahlteiler, einem bewegbaren Spiegel und einem stationären Spiegel zusammen. Weiterhin weist der Messkopf 20 eine Kamera 22 auf, die mit einem elektronischen Bildsensor, zum Beispiel einem CCD- oder CMOS-Sensor, versehen ist. Der Bildsensor ist im Strahlengang des Shearingelements angeordnet und dient dazu, die interferierenden Lichtbündel aufzunehmen.

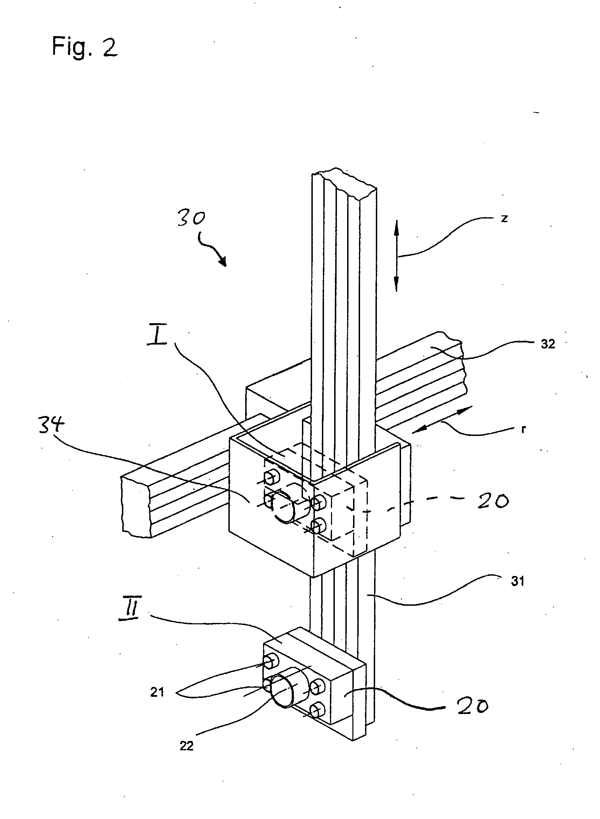

Wie insbesondere Fig. 2 zu erkennen gibt, weist die Vorrichtung ferner ein Positionierungsmittel 30 auf, durch das der Messkopf 20 zwischen einer Parkposition I und einer Messposition II bewegt werden kann. Das Positionierungsmittel 30 umfasst eine erste Verstelleinheit 31, durch die der Messkopf 20 in einer axialen Richtung z bewegt werden kann. Außerdem umfasst das Positionierungsmittel 30 eine zweite Verstelleinheit 32, durch die der Messkopf 20 in einer radialen Richtung r, die sich orthogonal zur axialen Richtung z erstreckt, bewegt werden kann. Die Verstelleinheiten 31, 32 sind zum Beispiel als Linearführung oder Linearmotor ausgestaltet und ermöglichen demzufolge eine geradlinige Bewegung des Messkopfs 20 in der axialen Richtung z und der radialen Richtung r. Die Verstelleinheit 31 ist an die Verstelleinheit 32 gekoppelt, so dass sich die Verstelleinheit 31 durch die Verstelleinheit 32 in radialer Richtung r bewegen lässt. Die Verstelleinheit 32 ist an einem stationären, zweckmäßigerweise im Wesentlichen zerstörungsfrei zerlegbaren Portal 33 abgestützt, wie Fig. 1 zu erkennen gibt. Der Messkopf 20 ist mit der Verstelleinheit 31 verbunden und kann bei Bedarf mittels einer weiteren Verstelleinheit um eine sich beispielsweise in horizontaler Richtung erstreckende Schwenkachse geschwenkt werden, um den Messkopf 20 in der gewünschten Messposition II auszurichten. An dem Positionierungsmittel 30 ist außerdem eine Schutzblende 34 angeordnet, durch die der Messkopf 20 in der Parkposition I abgeschirmt wird.

Weiterhin weist die Vorrichtung eine Druckkammer auf, in welcher der Reifen 10 einem vorgegebenen Druck ausgesetzt werden kann. Der in der Druckkammer herrschende Druck kann ein Überdruck oder ein Unterdruck sein. Ein Sicherheitsventil 100 verhindert, dass in der Druckkammer ein übermässiger, eine Verformung oder Beschädigung der Druckkammer hervorrufender Überdruck oder Unterdruck auftreten kann. Im Zusammenhang mit einem shearographischen Messverfahren hat es sich als zweckmäßig erwiesen, als Referenzzustand den Atmosphärendruck zu wählen und als Messzustand einen Unterdruck vorzusehen, auf den die Druckkammer evakuiert wird. Um eine schnelle Änderung des Drucks in der Druckkammer herbeizuführen, ist in der Druckkammer wenigstens ein Füllkörper 80 angeordnet, der das Volumen der Druckkammer verkleinert. Die Druckkammer weist eine Haube 40 auf, die eine offene Seite hat, die einer Unterlage 70 zugewandt ist. Bei der Unterlage 70 handelt es sich zum Beispiel um das Fundament des Gebäudes, in dem die Vorrichtung aufgestellt ist.

Wie Fig. 1 ferner zu erkennen gibt, ist in der Druckkammer eine Kamera 90 angeordnet, die mit einem sich außerhalb der Druckkammer befindenden Monitor 91 verbunden ist. Die Kamera 90 ist so in der Druckkammer angeordnet, dass der Innenraum der Druckkammer aufgenommen wird. Die für eine zuverlässige Aufnahme erforderliche Helligkeit im Inneren der Druckkammer wird durch eine Leuchte 93 sichergestellt. Die Kamera 90 ermöglicht das Überwachen des Innenraums der Druckkammer während der Prüfung des Reifens 10. Darüber hinaus kann die Kamera 90 Bestandteil eines Navigationssystems sein, welches das Beladen und Entladen der Druckkammer, zum Beispiel mittels eines Gabelstaplers, erleichtert, indem das von dem Innenraum der Druckkammer aufgenommene Bild auf dem Monitor 91 oder auf einem an dem Gabelstapler vorgesehenen Monitor angezeigt wird. Zu einer praxisgerechten Ausgestaltung trägt ferner eine Warnleuchte 92 bei, die außerhalb der Druckkammer angeordnet ist. Die Warnleuchte 92 signalisiert beispielsweise die Durchführung des Prüfvorgangs oder warnt gegebenenfalls zusammen mit akustischen Warnsignalen vor Betriebsstörungen, wenn zum Beispiel das Sicherheitsventil 100 ausgelöst wird.

Die Vorrichtung weist überdies ein Untergestell 60 auf, auf dem der Reifen 10 während der Prüfung gelagert wird und an dem das Portal 33, an dem das Positionierungsmittel 30 befestigt ist, abgestützt ist. Der Reifen 10 kann, wie in Fig. 1 zu erkennen ist, liegend oder, wie es beispielsweise aus der DE 203 14 939 U1 bekannt ist, stehend gelagert werden. Im Fall der liegenden Lagerung des Reifens 10 verläuft die axiale Richtung z vertikal und die radiale Richtung r horizontal. Das Untergestell 60 ist mit einer Drehvorrichtung 62 versehen, die eine Rotation des Reifens 10 um eine Rotationsachse R ermöglicht. Die Rotationsachse R erstreckt sich im Fall der liegenden Lagerung des Reifens 10 auf dem Untergestell 60 in der axialen Richtung z.

Die Haube 40 ist mittels einer Vielzahl an Lagerelementen 41 auf der Unterlage 70 abgestützt. Bei den Lagerelementen 41 handelt es sich zum Beispiel um Schwingungsisolatoren, durch welche die Übertragung von auftretenden Schwingungen, insbesondere Luft- und Körperschall, von der Unterlage 70 auf die Haube 40 minimiert wird. Bei den Lagerelementen 41 kann es sich jedoch auch um Dichtungselemente handeln, welche die Haube 40 gegenüber der Unterlage 70 druckdicht abdichten. Als besonders vorteilhaft hat es sich erwiesen, wenn die Lagerelemente 41 sowohl Schwingungsisolatoren als auch Dichtungselemente umfassen. So kann zum Beispiel die im Querschnitt quadratische Haube 40 in den Eckbereichen durch jeweils einen Schwingungsisolator abgestützt werden, wohingegen der zwischen den Schwingungsisolatoren vorhandene Freiraum durch ein Dichtungselement abgedichtet wird.

Das Untergestell 60 ist mittels einer Vielzahl an Lagerelementen 61 an der Unterlage 70 abgestützt. Bei den Lagerelementen 61 handelt es sich zweckmäßigerweise um Schwingungsisolatoren, durch welche die Übertragung von auftretenden Schwingungen von der Unterlage 70 auf das Untergestell 60 minimiert wird.

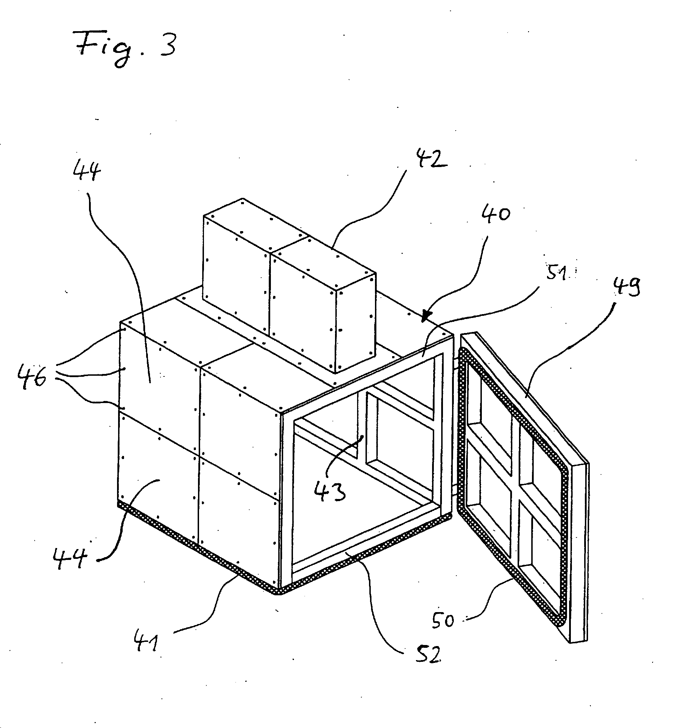

Wie insbesondere Fig. 3 zu erkennen gibt, ist die Haube 40 mit einer Erweiterung 42 versehen, die sich im Bereich der Deckfläche der Haube 40 in radialer Richtung r erstreckt. Die Erweiterung 42 dient dazu, zumindest in der Parkposition I des Messkopfs 20 einen Teil der Verstelleinheit 31 aufzunehmen. Auf Grund der Erstreckung der Erweiterung 42 in radialer Richtung r ist es möglich, die Verstelleinheit 31 zusammen mit der Verstelleinheit 32 in radialer Richtung r zu bewegen.

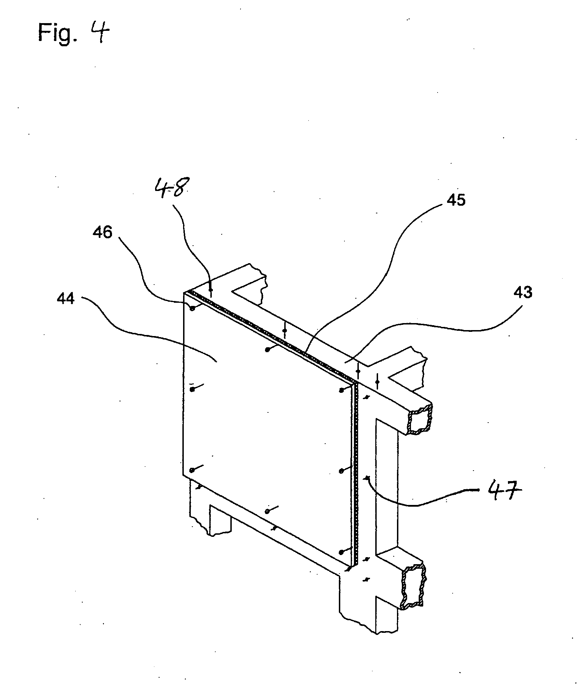

Die Haube 40 weist einen Rahmen 43 auf, der, wie insbesondere Fig. 4 zu erkennen gibt, in eine Vielzahl an Rahmenteilen zerlegbar ist. Die Rahmenteile sind zweckmäßigerweise mittels in Bohrungen 48 eingreifende Schrauben oder Bolzen miteinander verbunden, um eine einfache Montage und im Wesentlichen zerstörungsfreie Demontage des Rahmens 43 zu ermöglichen.

Der Rahmen 43 ist mittels einer Vielzahl an Paneelen 44 verkleidet. Die Paneelen 44 sind mittels in Bohrungen 47 eingreifenden Schrauben 46 lösbar an dem Rahmen 43 befestigt, um eine einfache Montage und im Wesentlichen zerstörungsfreie Demontage der Haube 40 zu ermöglichen. Darüber hinaus sind die Paneelen 44 mittels einer Dichtung 45 druckdicht abgedichtet, wie insbesondere aus Fig. 4 ersichtlich ist.

Die Haube 40 ist mit einer Tür 49 versehen, die, wie Fig. 3 zu erkennen gibt, beispielsweise als einflügelige, um eine vertikale Achse schwenkbare Schwenktür ausgestaltet sein kann. Die Tür 49 liegt im geschlossenen Zustand an einer durch die Haube 40 gebildeten Zarge 51 an und ist mittels einer Dichtung 50 druckdicht abgedichtet. Um eine zuverlässige Abdichtung zu gewährleisten, ist die Haube 40 zudem mit einer Türschwelle 52 versehen, an welcher die Dichtung 50 im geschlossenen Zustand der Tür 49 anliegt.

Um ein shearographisches Messverfahren durchzuführen, wird der Reifen 10 mittels der kohärentes Licht emittierenden Laserdioden 21 beleuchtet. Üblicherweise wird zum Prüfen der inneren Umfangsfläche des Reifens 10 sowohl der Bereich des Gürtels des Reifens 10 als auch die sich im Übergang von der Lauffläche auf die Seitenwände befindende Schulter des Reifens 10 beleuchtet. Die Seitenwände des Reifens 10 werden im Allgemeinen zwar von außen geprüft, können aber bei einer ausreichend großen Reifenbreite beziehungsweise ausreichend großem Wulstabstand des Reifens 10 auch von innen geprüft werden. Die von der Oberfläche des Reifens 10 rückgestreuten Lichtbündel werden mittels eines Objektivs aufgenommen und auf das Shearingelement des Messkopfs 20 abgebildet sowie mit Hilfe von diesem zur Interferenz gebracht. Die interferierenden Lichtbündel werden mittels des im Strahlengang des Shearingelements angeordneten Bildsensors der Kamera 22 aufgenommen, um ein Interferogramm zu erzeugen. Der Messkopf 20 ist mit einer nicht dargestellten Steuer- und Auswerteeinrichtung verbunden, welche die erzeugten Interferogramme verarbeitet, um beispielsweise aus unterschiedlichen Zuständen des Reifens 10, die sich auf Grund einer Änderung des Drucks in der Druckkammer ergeben, ein die Verformung an der Oberfläche des Reifens 10 anzeigendes Shearogramm zu erstellen. Die Steuer- und Auswerteeinrichtung dient zudem insbesondere dazu, das Positionierungsmittel 30, die Drehvorrichtung 62, den Messkopf 20, die Kamera 90, die Warnleuchte 92, die Leuchte 93 und den in der Druckkammer herrschenden Druck zu steuern.

Die zuvor beschriebene Vorrichtung zeichnet sich dadurch aus, dass relativ große Bauteile, wie zum Beispiel OTR-Reifen mit einem Durchmesser von zuweilen mehr als 5 m, geprüft werden können. Dies ist vor allem darauf zurückzuführen, dass die Haube 40 und das Untergestell 60 unabhängig voneinander mittels den Lagerelementen 41, 61 auf der Unterlage 70 abgestützt werden. Die voneinander entkoppelte Abstützung von Haube 40 und Untergestell 60 ermöglicht eine einfache Anpassung der Lagerelemente 41, 61 an die abzustützende Masse, welche die Haube 40 und das Untergestell 60 jeweils haben. Zu einem einfachen Prüfen von relativ großen Prüfobjekten mittels eines shearographischen Messverfahrens tragen ferner die Erweiterung 42 und der Füllkörper 80 bei, die das Volumen der Druckkammer so weit wie möglich verringern, so dass sich der Druck in der Druckkammer rasch ändern lässt und damit kurze Prüfzyklen sichergestellt sind. Nicht zuletzt stellen die einfache Montage und zerstörungsfreie Demontage der Haube 40 sicher, dass die Vorrichtung auch dann noch einfach transportiert werden kann, wenn die Druckkammer aufgrund der Dimensionen des Prüfobjekts verhältnismäßig groß ist.

### Bezugszeichenliste

- 10: Reifen

- 20: Messkopf
- 21: Laserdiode
- 22: Kamera

- 30: Positionierungsmittel
- 31: erste Verstelleinheit
- 32: zweite Verstelleinheit
- 33: Portal
- 34: Schutzblende

- 40: Haube
- 41: zweites Lagerelement
- 42: Erweiterung
- 43: Rahmen
- 44: Paneel
- 45: Dichtung
- 46: Schraube
- 47: Bohrung
- 48: Bohrung
- 49: Tür

- 50: Dichtung
- 51: Zarge
- 52: Türschwelle

- 60: Untergestell
- 61: erstes Lagerelement
- 62: Drehvorrichtung

- 70: Unterlage

- 80: Füllkörper

- 90: Kamera
- 91: Monitor
- 92: Warnleuchte
- 93: Leuchte

- 100: Sicherheitsventil

- R: Rotationsachse

- r: radiale Richtung
- z: axiale Richtung

- I: Parkposition
- II: Messposition

## Patentansprüche

1. Vorrichtung zum Prüfen eines Prüfobjekts, insbesondere eines Reifens (10), mittels eines zerstörungsfreien interferometrischen Messverfahrens, umfassend:
wenigstens einen Messkopf (20), durch den das Prüfobjekt (10) zum Erzeugen eines Messergebnisses abtastbar ist;
ein Positionierungsmittel (30), durch das der Messkopf (20) zwischen einer Parkposition (1) und einer Messposition (11) bewegbar ist;
eine Druckkammer, in welcher das Prüfobjekt (10) einem vorgegebenen Druck aussetzbar ist und die eine Haube (40) aufweist, und
ein Untergestell (60), auf dem das Prüfobjekt (10) lagerbar ist;
**dadurch gekennzeichnet, dass** das Untergestell (60) auf einem ersten Lagerelement (61) abgestützt ist, durch das die Übertragung von Schwingungen von einer Unterlage (70) auf das Untergestell (60) reduzierbar ist, und
und dass die Haube (40) separat von dem Untergestell (60) auf einem zweiten Lagerelement (41) abgestützt ist, durch das die Übertragung von Schwingungen von der Unterlage (70) auf die Haube (40) reduzierbar ist.

2. Vorrichtung nach Anspruch 1, **dadurch gekennzeichnet, dass** das erste Lagerelement (61) und/oder das zweite Lagerelement (41) als Schwingungsisolator ausgestaltet sind.

3. Vorrichtung nach Anspruch 1 oder 2, **dadurch gekennzeichnet, dass** das zweite Lagerelement (41) ein Dichtungselement umfasst.

4. Vorrichtung nach einem der Ansprüche 1 bis 3, **dadurch gekennzeichnet, dass** die Haube (40) im Wesentlichen zerstörungsfrei zerlegbar ist.

5. Vorrichtung nach einem der Ansprüche 1 bis 4, **dadurch gekennzeichnet, dass** das Untergestell (60) und/oder das Positionierungsmittel (30) im Wesentlichen zerstörungsfrei zerlegbar sind.

6. Vorrichtung nach einem der Ansprüche 1 bis 5, **dadurch gekennzeichnet, dass** das Positionierungsmittel (30) an dem Untergestell (60) abgestützt ist.

7. Vorrichtung nach einem der Ansprüche 1 bis 6, **dadurch gekennzeichnet, dass** die Haube (40) mit einer Erweiterung (42) versehen ist, die in der Parkposition (I) zumindest einen Teil des Positionierungsmittels (30) aufnimmt.

8. Vorrichtung nach einem der Ansprüche 1 bis 7, **dadurch gekennzeichnet, dass** die Haube (40) einen Rahmen (43) aufweist, der mittels einer Vielzahl an Paneelen (44) verkleidet ist.

9. Vorrichtung nach Anspruch 8, **dadurch gekennzeichnet, dass** die Paneelen (44) mittels einer Dichtung (45) druckdicht abgedichtet sind.

10. Vorrichtung nach Anspruch 8 oder 9, **dadurch gekennzeichnet, dass** die Paneelen (44) mittels Befestigungselementen (46) lösbar an dem Rahmen (43) befestigt sind.

11. Vorrichtung nach einem der Ansprüche 8 bis 10, **dadurch gekennzeichnet, dass** der Rahmen (43) im Wesentlichen zerstörungsfrei in eine Vielzahl an Rahmenteile zerlegbar ist.

12. Vorrichtung nach einem der Ansprüche 1 bis 11, **dadurch gekennzeichnet, dass** die Haube (40) mit einer Tür (49) versehen ist.

13. Vorrichtung nach Anspruch 12, **dadurch gekennzeichnet, dass** die Tür (49) als Schwenktür ausgestaltet ist, die vorzugsweise einflügelig oder zweiflügelig ist.

14. Vorrichtung nach Anspruch 13, **dadurch gekennzeichnet, dass** die Tür (49) um eine vertikale Achse schwenkbar ist, wobei vorzugsweise die Tür (49) mit einem Stützrad versehen ist.

15. Vorrichtung nach Anspruch 13, **dadurch gekennzeichnet, dass** die Tür (49) um wenigstens eine horizontale Achse schwenkbar ist, wobei vorzugsweise die Tür (49) mit einem Gegengewicht verbunden ist.

16. Vorrichtung nach einem der Ansprüche 12 bis 15, **dadurch gekennzeichnet, dass** die Tür (49) im geschlossenen Zustand mittels einer Dichtung (50) druckdicht abgedichtet ist.

17. Vorrichtung nach einem der Ansprüche 1 bis 16, **dadurch gekennzeichnet, dass** in der Druckkammer wenigstens ein Füllkörper (80) angeordnet ist.

18. Vorrichtung nach einem der Ansprüche 1 bis 17, **dadurch gekennzeichnet, dass** in der Druckkammer wenigstens eine Kamera (90) angeordnet ist.

19. Vorrichtung nach Anspruch 18, **gekennzeichnet durch** einen außerhalb der Druckkammer angeordneten Monitor (91), der mit der Kamera (90) verbunden ist.

20. Vorrichtung nach einem der Ansprüche 1 bis 19, **dadurch gekennzeichnet, dass** in der Druckkammer wenigstens eine künstliche Lichtquelle (93) angeordnet ist.

21. Vorrichtung nach einem der Ansprüche 1 bis 20, **dadurch gekennzeichnet, dass** die Druckkammer mit einem Sicherheitsventil (100) versehen ist.

22. Vorrichtung nach einem der Ansprüche 1 bis 21, **dadurch gekennzeichnet, dass** der Messkopf (20) durch das Positionierungsmittel (30) in einer axialen Richtung (z) und/oder in einer radialen Richtung (r) bewegbar ist.

23. Vorrichtung nach Anspruch 22, **dadurch gekennzeichnet, dass** die axiale Richtung (z) vertikal verläuft und die radiale Richtung (r) horizontal verläuft.

24. Vorrichtung nach Anspruch 22 oder 23 **dadurch gekennzeichnet, dass** das Positionierungsmittel (30) eine erste Verstelleinheit (31), durch die der Messkopf (20) in der axialen Richtung (z) bewegbar ist, und eine zweite Verstelleinheit (32), durch die der Messkopf (20) in radialer Richtung (r) bewegbar ist, aufweist, wobei vorzugsweise die erste Verstelleinheit (31) und die zweite Verstelleinheit (32) aneinander gekoppelt sind.

25. Vorrichtung nach einem der Ansprüche 1 bis 24, **dadurch gekennzeichnet, dass** der Messkopf (20) relativ zu dem Prüfobjekt (10) um eine sich in der axialen Richtung (z) erstreckende Rotationsachse (R) drehbar ist.

26. Vorrichtung nach Anspruch 25, **dadurch gekennzeichnet, dass** das Untergestell (60) mit einer Drehvorrichtung (62) versehen ist, durch die das Prüfobjekt (10) um die Rotationsachse (R) drehbar ist.

27. Vorrichtung nach einem der Ansprüche 1 bis 26, **dadurch gekennzeichnet, dass** der Messkopf (20) umfasst:
eine Beleuchtungseinheit (21), durch die das Prüfobjekt (10) beleuchtet wird;
ein Shearingelement, durch das die von dem Prüfobjekt (10) rückgestreuten Lichtbündel zur Interferenz gebracht werden, und
einen elektronischen Bildsensor (22), der im Strahlengang des Shearingelements angeordnet ist und die interferierenden Lichtbündel aufnimmt.

28. Vorrichtung nach einem der Ansprüche 1 bis 27, **gekennzeichnet durch** eine Schutzblende (34), mittels welcher der Messkopf (20), insbesondere die Beleuchtungseinheit (21), in der Parkposition (I) abgeschirmt werden.

29. Vorrichtung nach einem der Ansprüche 1 bis 28, **gekennzeichnet durch** eine Steuer- und Auswerteeinrichtung zum Steuern des Positionierungsmittels (30) und/oder der Drehvorrichtung (62) und/oder des Messkopfes (20) und/oder des in der Druckkammer herrschenden Drucks und zum Auswerten des Messergebnisses.

## Claims

1. Device for testing a test object, in particular a tire (10), by means of a non-destructive interferometric measuring method comprising:
at least one measuring head (20), by which the test object (10) is scanned to produce a measurement value;
a positioning means (30) by which the measuring head (20) can be moved between a park position (I) and a measuring position (II);
a pressure chamber in which the test object (10) is able to be subjected to a prescribed pressure and which has a hood (40), and
a sub-frame (60), on which the test object (10) can be mounted;
**characterised in that** the sub-frame (60) is supported on a first bearing element (61) which can reduce the transmittal of vibrations from a base (70) to the sub-frame (60), and
that the hood (40) is supported separately from the sub-frame (60) on a second bearing element (41) which can reduce the transmittal of vibrations from the base (70) to the hood (40).

2. Device according to claim 1, **characterised in that** the first bearing element (61) and/or the second bearing element (41) are configured as vibration insulators.

3. Device according to claims 1 or 2, **characterised in that** the second bearing element (41) comprises a sealing element.

4. Device according to one of the claims 1 to 3, **characterised in that** the hood (40) is essentially able to be dismantled non-destructively.

5. Device according to one of the claims 1 to 4, **characterised in that** the sub-frame (60) and/or the positioning means (30) can essentially be dismantled non-destructively.

6. Device according to one of the claims 1 to 5 **characterised in that** the positioning means (30) is supported on the sub-frame (60).

7. Device according to one of the claims 1 to 6, **characterised in that** the hood (40) is provided with an extension (42) which, in the park position (I), accommodates at least a part of the positioning means (30).

8. Device according to one of the claims 1 to 7, **characterised in that** the hood (40) is provided with a frame (43) which is lined with a plurality of panels (44).

9. Device according to claim 8, **characterised in that** the panels (44) are sealed pressure-tight by means of a seal (45).

10. Device according to claim 8 or 9, **characterised in that** the panels (44) are detachably fastened into the frame (43) by means of fastening elements (46).

11. Device according to one of the claims 8 to 10, **characterised in that** the frame (43) can essentially be dismantled non-destructively into a plurality of frame parts.

12. Device according to one of the claims 1 to 11, **characterised in that** the hood (40) is provided with a door (49).

13. Device according to claim 12, **characterised in that** the door (49) is configured as a swing door which is preferably a single or double-wing door.

14. Device according to claim 13, **characterised in that** the door (49) can swivel on a vertical axis wherein the door (49) is preferably provided with a supporting wheel.

15. Device according to claim 13, **characterised in that** the door (49) can swing around at least one horizontal axis, wherein preferably the door (49) is connected to a counterweight.

16. Device according to one of the claims 12 to 15, **characterised in that**, in the closed position, the door (49) is sealed pressure-tight by means of a seal (50).

17. Device according to one of the claims 1 to 16, **characterised in that** there is at least one padding element (80) arranged in the pressure chamber.

18. Device according to one of the claims 1 to 17, **characterised in that** there is at least one camera (90) positioned in the pressure chamber.

19. Device according to claim 18, **characterised in that** a monitor (91) connected to the camera (90) is positioned outside the pressure chamber.

20. Device according to one of the claims 1 to 19, **characterised in that** there is at least one source of artificial light (93) positioned within the pressure chamber.

21. Device according to one of the claims 1 to 20, **characterised in that** the pressure chamber is provided with a safety valve (100).

22. Device according to one of the claims 1 to 21, **characterised in that** the measuring head (20) can be moved by the positioning means (30) in an axial direction (z) and/or in a radial direction (r).

23. Device according to claim 22, **characterised in that** the axial direction (z) extends in a vertical plane and the radial direction (r) extends in a horizontal plane.

24. Device according to claim 22 or 23, **characterised in that** the positioning means (30) has a first adjustment unit (31) by means of which the measuring head (20) can be moved in an axial direction (z), and a second adjustment unit (32) by means of which the measuring head (20) can be moved in a radial direction (r), wherein the first adjustment unit (31) and the second adjustment unit (32) are preferably coupled to one another.

25. Device according to one of the claims 1 to 24, **characterised in that** the measuring head (20) can be turned around an axis of rotation (R) extending in an axial direction (z) relative to the test object (10).

26. Device according to claim 25, **characterised in that** the sub-frame (60) is provided with a rotation installation (62) by means of which the test object (10) can be turned around the axis of rotation (R).

27. Device according to one of the claims 1 to 26, **characterised in that** the measuring head (20) comprises:
a lighting unit (21) by means of which the test object (10) is illuminated;
a shearing element by means of which the light beams reflected from the test object (10) are caused to produce interference, and
an electronic image sensor (22), positioned in the optical path of the shearing element, which captures the interfered light beams.

28. Device according to one of the claims 1 to 27, **characterised in that** it has a protective screen (34) by means of which the measuring head (20) and in particular the lighting unit (21) are shielded in the park position (I).

29. Device according to one of the claims 1 to 28, **characterised in that** a control and evaluation device for controlling the positioning means (30) and/or the rotation installation (62) and/or the measuring head (20) and/or the pressure prevailing in the pressure chamber, and for evaluating the measurement results.

## Revendications

1. Dispositif pour tester un objet à tester, en particulier un pneumatique (10), au moyen d'un procédé de mesure interférométrique non destructif, comprenant :
au moins une tête de mesure (20) au moyen de laquelle l'objet à tester (10) peut être palpé pour engendrer un résultat de mesure ;
un moyen de positionnement (30) grâce auquel la tête de mesure (20) est déplaçable entre une position de rangement (I) et une position de mesure (II);
une chambre à pression dans laquelle l'objet à tester (10) peut être exposé à une pression prédéterminée et qui comporte un capot (40), et un châssis (60) sur lequel l'objet à tester (10) peut être monté ;
**caractérisé en ce que** le châssis (60) est soutenu sur un premier élément de montage (61) au moyen duquel la transmission d'oscillations depuis un socle (70) vers le châssis (60) peut être réduite, et
**en ce que** le capot (40) est soutenu séparément du châssis (60) sur un second élément de montage (41) au moyen duquel la transmission d'oscillations depuis le socle (70) vers le capot (40) peut être réduite.

2. Dispositif selon la revendication 1, **caractérisé en ce que** le premier élément de montage (61) et/ou le second élément de montage (41) sont conçus comme des isolateurs d'oscillations.

3. Dispositif selon la revendication 1 ou 2, **caractérisé en ce que** le second élément de montage (41) comprend un élément d'étanchement.

4. Dispositif selon l'une des revendications 1 à 3, **caractérisé en ce que** le capot (40) est démontable sensiblement de manière non destructive.

5. Dispositif selon l'une des revendications 1 à 4, **caractérisé en ce que** le châssis (60) et/ou le moyen de positionnement (30) sont démontables sensiblement de manière non destructive.

6. Dispositif selon l'une des revendications 1 à 5, **caractérisé en ce que** le moyen de positionnement (30) est soutenu sur le châssis (60).

7. Dispositif selon l'une des revendications 1 à 6, **caractérisé en ce que** le capot (40) est pourvu d'un élargissement (42) qui, dans la position de rangement (I), reçoit au moins une partie du moyen de positionnement (30).

8. Dispositif selon l'une des revendications 1 à 7, **caractérisé en ce que** le capot (40) comprend un cadre (43) qui est habillé au moyen d'une pluralité de panneaux (44).

9. Dispositif selon la revendication 8, **caractérisé en ce que** les panneaux (44) sont étanchés de manière étanche à la pression au moyen d'un joint (45).

10. Dispositif selon la revendication 8 ou 9, **caractérisé en ce que** les panneaux (44) sont fixés de façon détachable sur le cadre (43) au moyen d'éléments de fixation (46).

11. Dispositif selon l'une des revendications 8 à 10, **caractérisé en ce que** le cadre (43) est démontable en une pluralité de parties de cadre de manière sensiblement non destructive.

12. Dispositif selon l'une des revendications 1 à 11, **caractérisé en ce que** le capot (40) est pourvu d'une porte (49).

13. Dispositif selon la revendication 12, **caractérisé en ce que** la porte (49) est conçue sous forme de porte pivotante, qui est de préférence à un vantail ou à deux vantaux.

14. Dispositif selon la revendication 13, **caractérisé en ce que** la porte (49) est pivotante autour d'un axe vertical, et la porte (49) est de préférence pourvue d'une roulette de soutien.

15. Dispositif selon la revendication 13, **caractérisé en ce que** la porte (49) est pivotante autour d'au moins un axe horizontal, et la porte (49) est de préférence reliée à un contrepoids.

16. Dispositif selon l'une des revendications 12 à 15, **caractérisé en ce que** la porte (49) est étanchée de manière étanche à la pression dans la situation fermée au moyen d'un joint (50).

17. Dispositif selon l'une des revendications 1 à 16, **caractérisé en ce qu'**au moins un corps de remplissage (80) est agencé dans la chambre à pression.

18. Dispositif selon l'une des revendications 1 à 17, **caractérisé en ce qu'**au moins une caméra (90) est agencée dans la chambre à pression.

19. Dispositif selon la revendication 18, **caractérisé par** un moniteur (91), agencé à l'extérieur de la chambre à pression, qui est relié à la caméra (90).

20. Dispositif selon l'une des revendications 1 à 19, **caractérisé en ce qu'**au moins une source de lumière artificielle (93) est agencée dans la chambre à pression.

21. Dispositif selon l'une des revendications 1 à 20, **caractérisé en ce que** la chambre à pression est pourvue d'une soupape de sécurité (100).

22. Dispositif selon l'une des revendications 1 à 21, **caractérisé en ce que** la tête de mesure (20) est déplaçable grâce au moyen de positionnement (30) dans une direction axiale (z) et/ou dans une direction radiale (r).

23. Dispositif selon la revendication 22, **caractérisé en ce que** la direction axiale (z) s'étend verticalement et la direction radiale (r) s'étend horizontalement.

24. Dispositif selon la revendication 22 ou 23, **caractérisé en ce que** le moyen de positionnement (30) comprend une première unité de déplacement (31) au moyen de laquelle la tête de mesure (20) est déplaçable dans la direction axiale (z), et une seconde unité de déplacement (32) au moyen de laquelle la tête de mesure (20) est déplaçable en direction radiale (r), et la première unité de déplacement (31) et la seconde unité de déplacement (32) sont de préférence couplées l'une à l'autre.

25. Dispositif selon l'une des revendications 1 à 24, **caractérisé en ce que** la tête de mesure (20) est susceptible d'être tournée par rapport à l'objet à tester (10) autour d'un axe de rotation (R) qui s'étend dans la direction axiale (z).

26. Dispositif selon la revendication 25, **caractérisé en ce que** le châssis (60) est pourvu d'un dispositif tournant (62) au moyen duquel l'objet à tester (10) est susceptible d'être tourné autour de l'axe de rotation (R).

27. Dispositif selon l'une des revendications 1 à 26, **caractérisé en ce que** la tête de mesure (20) comprend :
une unité d'éclairage (21) au moyen de laquelle l'objet à tester (10) est éclairé ;
un élément de "Shearing", au moyen duquel les faisceaux lumineux diffusés en retour par l'objet à tester (10) sont amenés à interférer, et
un capteur d'image électronique (22), qui est agencé dans le trajet des rayons de l'élément de "Shearing" et qui reçoit les faisceaux lumineux en interférence.

28. Dispositif selon l'une des revendications 1 à 27, **caractérisé par** un diaphragme de protection (34) au moyen duquel la tête de mesure (20), en particulier l'unité d'éclairage (21), est protégée dans la position de rangement (I).

29. Dispositif selon l'une des revendications 1 à 28, **caractérisé par** une unité de commande et d'évaluation pour commander le moyen de positionnement (30) et/ou le dispositif tournant (62) et/ou la tête de mesure (20) et/ou la pression qui règne dans la chambre à pression, et pour évaluer le résultat de mesure.
